# FASCICULE DE BREVET EUROPEEN

(11) **EP 0 423 665 B1**
(45) Date de publication et mention de la délivrance du brevet: **03.08.1994**
(21) Numéro de dépôt: 90119679.0
(22) Date de dépôt: 15.10.1990
(51) Int. Cl.: H02G 5/06

(54) **Ligne électrique blindée et son procédé de fabrication**
Gekapselte elektrische Leitung und Verfahren zu seiner Herstellung
Enclosed electrical line and method of making the same

(30) Priorité: 16.10.1989 FR 8913488
(43) Date de publication de la demande: 24.04.1991
(73) Titulaire: GEC ALSTHOM SA, 75116 Paris (FR)
(72) Inventeur: Thuries, Edmond, F-69330 Meyzieu (FR)
(74) Mandataire: Weinmiller, Jürgen

(56) Documents cités:
- CH-A- 0 376 555
- CH-A- 0 550 502
- DE-A- 3 315 588
- IEEE Transactions on Power Apparatus & Systems, vol. 90, no. 6, novembre 1971, pages 2631-2637 ; B.O. Pedersen et al: "Development of a Compressed-Gas-Insulated Transmission Line"

## Description

La présente invention est relative à une ligne électrique blindée, du type dans laquelle le conducteur est placé dans une enceinte métallique remplie d'un gaz à bonnes propriétés diélectriques, tel que l'hexafluorure de soufre.

Le document IEEE Trans.Power Apparatus and Systems Vol. 90 N° 6, nov. 1971, pages 2631 à 2637 décrit des essais réalisés sur un tronçon de ligne de transmission isolée au gaz SF₆, mais on ne décrit pas les étapes de la construction d'une ligne réelle.

Le document DE 33 15 588 A1 décrit très schématiquement une ligne haute tension à double paroi et à remplissage par du SF₆. Là non plus, on ne décrit ni la construction réelle ni les étapes de fabrication.

Dans la demande de brevet français N° 89 01 029 déposée le 27 janvier 1989, n'appartenant pas à l'état de la technique selon l'article 54(2) de la CBE, on décrit une ligne blindée triphasée, comprenant au moins trois conducteurs de phase entourés chacun d'une enveloppe en aluminium remplie de gaz à bonnes propriétés diélectriques, les diverses enveloppes étant entourées d'une enveloppe d'acier étanche vis-à-vis de l'extérieur; selon une caractéristique de la ligne décrite dans le document précité, elle est constituée de tronçons réunis par des éléments de liaison permettant le montage de la ligne ainsi qu'un démontage d'un tronçon en défaut.

Un but de l'invention est de définir avec plus de précision les divers éléments constitutifs d'une ligne analogue à la ligne décrite précédemment, et de décrire un procédé de montage et de démontage de la ligne.

Ce but est atteint selon l'invention par le procédé de fabrication selon la revendication 1 et par la ligne blindée selon la revendication 2. En ce qui concerne des caractéristiques d'exemples préférés de mise en oeuvre, référence est faite aux revendications secondaires.

D'autres particularités de l'invention apparaîtront à la lumière de la description ci-après d'un exemple de réalisation de la ligne blindée de l'invention, en référence au dessin annexé dans lequel:
- la figure 1 est une vue en coupe transversale d'une ligne blindée avec quatre conducteurs de phase entourés chacun d'une enveloppe en aluminium, ces enveloppes étant entourées chacune par une enveloppe étanche vis-à-vis de l'extérieur,
- la figure 2 est une vue en coupe transversale d'une enveloppe d'aluminium destinée à entourer un conducteur de phase,
- la figure 3 est une vue en perspective d'un morceau de tronçon d'une phase de la ligne,
- la figure 4 est une vue partielle en perspective d'une enveloppe d'aluminium munie d'un raidisseur,
- la figure 5 est une vue en élévation partiellement coupée d'une portion de conducteur de phase muni de son enveloppe d'aluminium, selon l'invention,
- la figure 6 est une vue en coupe selon la ligne VI-VI de la figure 5,
- la figure 7 est une vue en coupe transversale d'un conducteur maintenu dans son enveloppe d'aluminium au moyen d'un élément de fixation réalisé selon une variante,
- la figure 8 est une vue en demi-coupe axiale d'un organe de liaison pour la jonction de deux tronçons d'un conducteur de phase,
- la figure 9 est une vue agrandie d'une partie de la figure 8,
- la figure 10 est une vue en coupe du cavalier figurant dans la figure 9,
- la figure 11 est une vue schématique en coupe transversale d'une ligne à trois conducteurs de phase ayant chacun une enveloppe d'aluminium mais une seule enveloppe commune étanche.

La ligne blindée de l'invention est utilisée principalement lorsque des obstacles naturels (rivière par exemple) ou des considérations d'ordre écologique obligent à placer la ligne à l'intérieur d'une galerie souterraine ou à l'enfouir dans le sol.

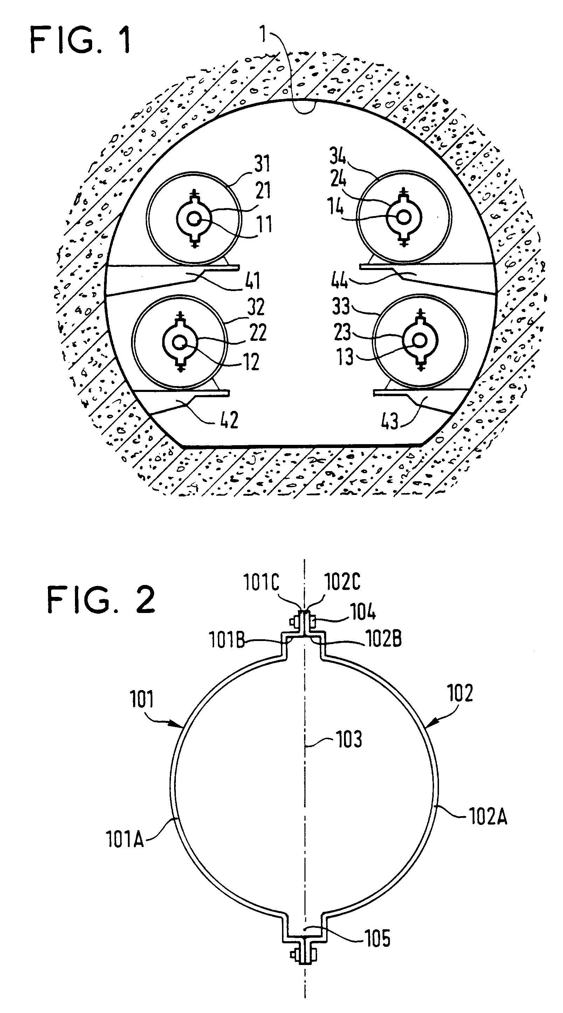

Dans la figure 1, on a représenté, en coupe transversale, une galerie souterraine 1 dans laquelle sont disposés quatre conducteurs 11, 12, 13 et 14 (un pour chaque phase d'une ligne triphasée plus un conducteur de secours). Chaque conducteur est entouré d'une enveloppe en aluminium, respectivement 21 à 24; les enveloppes en aluminium sont entourées chacune d'une enveloppe étanche vis-à-vis de l'extérieur; ces enveloppes, référencées 31 à 34, et placées sur des supports appropriés 41 à 44, sont de préférence en acier, mais on peut concevoir de les réaliser en un autre matériau; puisque ces enveloppes n'ont pas de fonction électrique, ce matériau peut être du béton, une matière plastique et plus généralement tout matériau pouvant être étanche vis-à-vis de l'extérieur lorsqu'il est rempli de gaz sous pression; ce matériau, de plus, doit permettre de constituer des tronçons pouvant être facilement assemblés l'un à l'autre. Dans la suite, on désignera ces enveloppes par les termes "enveloppe étanche" et les tubes la constituant par "tubes étanches".

Les enveloppes 21 à 24 sont remplies d'un gaz à bonnes propriétés diélectriques tel que l'hexafluorure de soufre SF6 pur ou mélangé d'un autre gaz, sous une pression de quelques bars; les enveloppes d'aluminium sont simplement étanches aux poussières.

Comme il a été déjà mentionné, la ligne est réalisée en tronçons raccordés bout à bout; la longueur L de ces tronçons n'est pas critique, mais résultera d'un compromis entre les nécessités de la manipulation d'un tel tronçon qui vont en faveur d'un tronçon court (un tronçon de quelques dizaines de mètres est plus facile à manipuler qu'un tronçon de plusieurs centaines de mètres) et les impératifs économiques qui militent en faveur de tronçons de grande longueur, car ce sont les pièces de raccord des tronçons et leur montage qui coûtent le plus cher dans la ligne blindée. Il semble que le tronçon idéal ait une longueur comprise entre 50 et 150 mètres.

Le procédé de réalisation de la ligne est le suivant:
- on réalise, à partir de tubes étanches de longueur comprise entre 5 et 20 mètres, des tronçons d'enveloppe étanche,
- on réalise,à partir de deux feuillards d'aluminium, d'épaisseur faible, deux demi-coquilles qui sont assemblées au fur et à mesure de leur élaboration pour constituer l'enveloppe d'aluminium et qui sont munies d'organes de rigidification, d'organes de maintien du conducteur de phase et de moyens de roulement,
- on dispose à l'intérieur de l'enveloppe d'aluminium, au fur et à mesure de sa formation, le conducteur de phase qu'on fixe au moyen des organes de maintien précités,
- on dispose dans une même enveloppe étanche trois ensembles comprenant un conducteur de phase et son enveloppe d'aluminium; en variante, on place dans une enveloppe étanche un seul ensemble du type précité, et on réalise une ligne triphasée avec trois enveloppes étanches ainsi remplies (et, éventuellement, une enveloppe étanche supplémentaire garnie pour constituer un conducteur de secours).

Le procédé se poursuit ainsi:
- on tire, au fur et à mesure de son élaboration, l'ensemble (ou les ensembles) constitué par l'enveloppe d'aluminium et son conducteur à l'intérieur du tronçon d'enveloppe étanche jusqu'à ce que cet ensemble débouche à l'extrémité du tronçon d'enveloppe étanche,
- on renouvelle les opérations précitées pour élaborer un autre tronçon de ligne blindée adjacent à celui qui vient d'être constitué,
- on fixe l'enveloppe étanche (ou les enveloppes étanches), les enveloppes d'aluminium et les conducteurs de chacun des deux tronçons voisins au moyen d'un organe de liaison entre tronçons.

On renouvelle toutes les opérations ci-dessus jusqu'à ce que la ligne ait la longueur voulue et ceci, pour chacune des phases de la ligne.

On remplit alors la ligne du gaz diélectrique choisi à la pression voulue, tronçon par tronçon et si nécessaire, phase par phase.

Tous les tronçons de ligne sont munis d'un orifice de remplissage de gaz, d'un manomètre de contrôle de la pression et d'un tamis moléculaire.

On notera que les enveloppes étanches, lorsqu'elles sont en acier, ne possèdent aucun revêtement intérieur de protection; leur surface extérieure est recouverte d'une couche de peinture ou de goudron pour éviter la corrosion.

La figure 2 montre, en coupe transversale, l'enveloppe d'aluminium qui est constitué de deux feuillards 101 et 102, conformés et assemblés selon un plan 103; chaque feuillard comporte en section une portion circulaire 101A (102A), un épaulement 101B (102B) et un méplat 101C (102C) percé de trous pour y engager des pièces de fixation tel que des rivets ou des ensembles vis-écrous 104. On peut aussi envisager de souder les deux feuillards l'un à l'autre. On notera que l'assemblage des deux feuillards peut être simple, car il n'est pas demandé une étanchéité au gaz de l'enveloppe, mais seulement une étanchéité à l'égard des poussières extérieures.

A l'intérieur de l'enveloppe étanche, l'enveloppe d'aluminium est disposée de manière que le plan 103 soit vertical, de sorte que les poussières éventuelles tombent dans la rigole 105 délimitée par les deux épaulements inférieurs et ainsi, ne nuisent pas à la tenue diélectrique de l'ensemble.

Dans la suite, l'exemple décrit concerne une ligne blindée où chaque enveloppe d'aluminium possède sa propre enveloppe étanche.

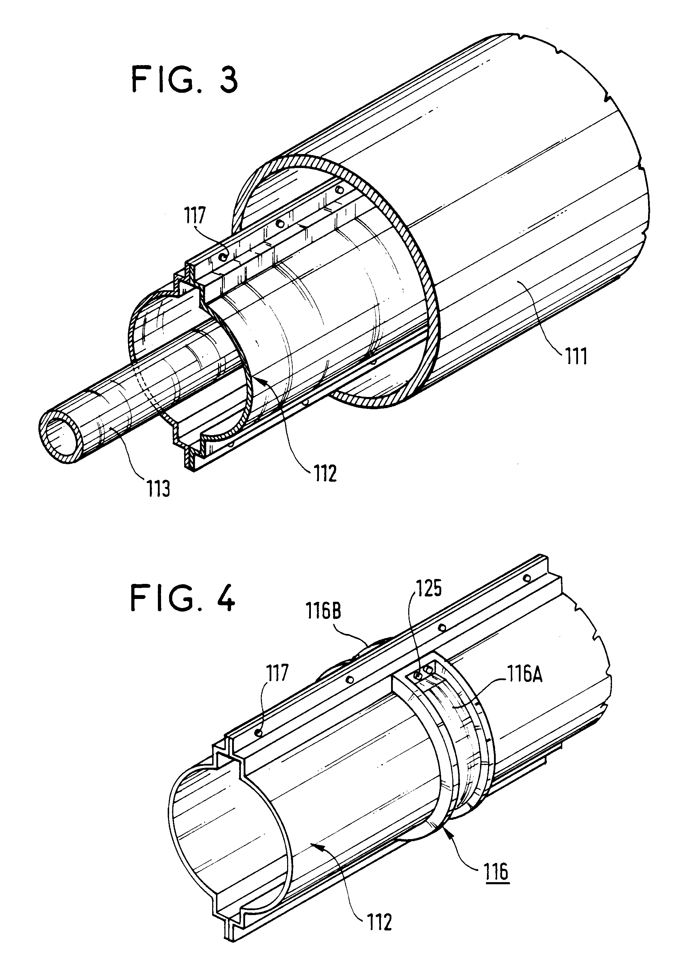

La figure 3 montre en perspective un morceau d'un tronçon d'une phase de la ligne blindée comprenant une enveloppe extérieure étanche 111 au gaz, une enveloppe d'aluminium 112 réalisée et disposée comme précédemment décrit et étanche à la poussière et un conducteur de phase 113 constituée d'une barre. L'intérieur est rempli de gaz diélectrique sous pression. On a référencé 117 les organes d'assemblage des deux demi-coquilles de l'enveloppe d'aluminium.

La figure 4 montre un morceau d'enveloppe d'aluminium 112; pour assurer une tenue mécanique des enveloppes d'aluminium dont l'épaisseur est faible (quelques millimètres), celles-ci sont munies de place en place de raidisseurs 116 constitués de deux demi-colliers 116A et 116B, de préférence en fonte, serrés sur les l'enveloppe au moyen de vis 125 en matériau amagnétique. Les demi-colliers sont serrés au niveau des rigoles de telle sorte que pour éviter l'écrasement des coquilles d'aluminium, on peut disposer dans ces rigoles des cales ou barrettes non représentées.

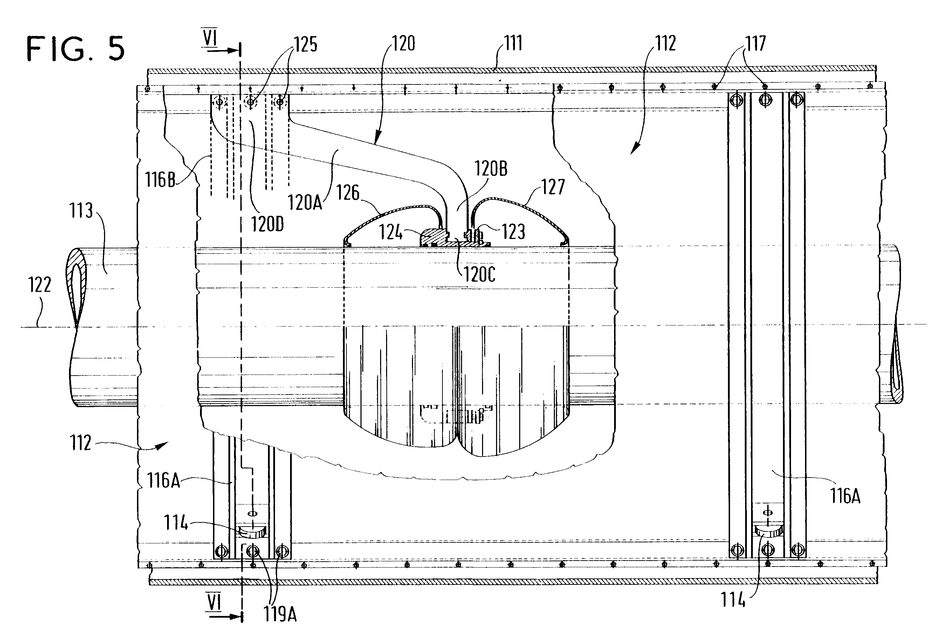

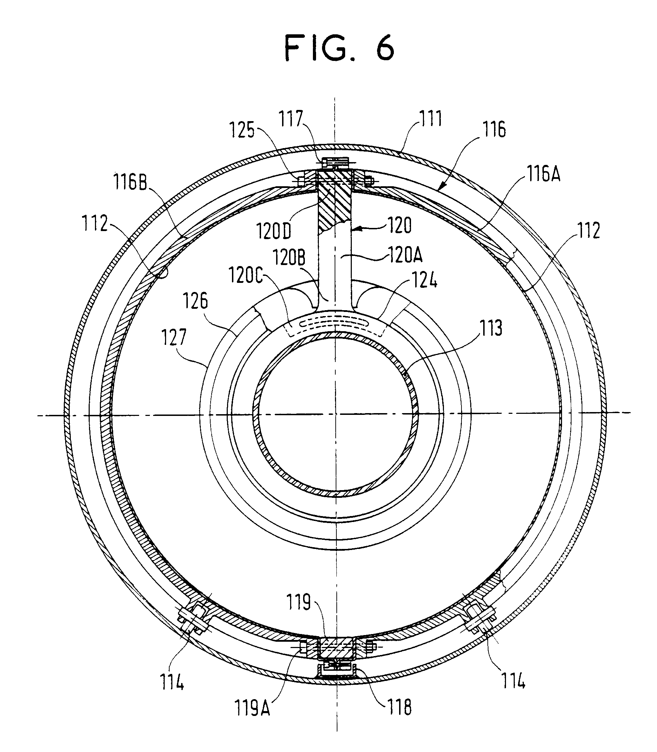

Les figures 5 et 6 montrent plus en détail comment sont disposés et maintenus,les uns par rapport aux autres, les différents éléments constitutifs d'un conducteur de phase. L'enveloppe d'aluminium 112 repose sur le fond de l'enveloppe 111 par des roulettes 114. Ces roulettes servent aussi à faciliter le déplacement de l'enveloppe d'aluminium à l'intérieur de l'enveloppe étanche lors de la construction de la ligne, comme il a été indiqué plus haut. Une butée 118, soudée dans le fond de l'enveloppe étanche, sert à guider l'enveloppe dans son mouvement et à l'orienter convenablement.

L'écartement de la rigole 105 est maintenu constant au moyens de barrettes 119 serrées par des boulons 119A.

Le conducteur 113 est maintenu à l'intérieur et dans l'axe de l'enveloppe d'aluminium 112 par un dispositif isolant désigné globalement par la référence 120 et comprenant une portion de cône 120A, s'étendant de la paroi de l'enveloppe à la périphérie du conducteur à maintenir.

La portion de cône 120A est prolongée, du côté du conducteur, par un bras 120B perpendiculaire à l'axe 122 commun à l'enveloppe et au conducteur et portant un épanouissement 120C munie d'une fente pour le passage de vis de fixation 123 d'un collier de serrage 124.

L'autre extrémité de la portion conique 120A est prolongée par un pied 120D s'engageant dans la rigole supérieure de l'enveloppe d'aluminium 112 et fixé à cette dernière par des boulons 125.

Le support isolant 120 est réalisé de préférence par moulage du matériau habituellement utilisé pour la réalisation des cônes isolants dans les installations électriques de type blindé.

Le support utilisé selon la présente invention offre les mêmes sécurités de fonctionnement pour un prix de revient moins élevé.

On fixe le support isolant de préférence dans la rigole supérieure de l'enveloppe isolante de sorte que les éventuelles poussières tombent dans la rigole inférieure.

Le support 120 est associé de manière classique à deux pare-effluves 126 et 127 disposés de part et d'autre du bras 120B.

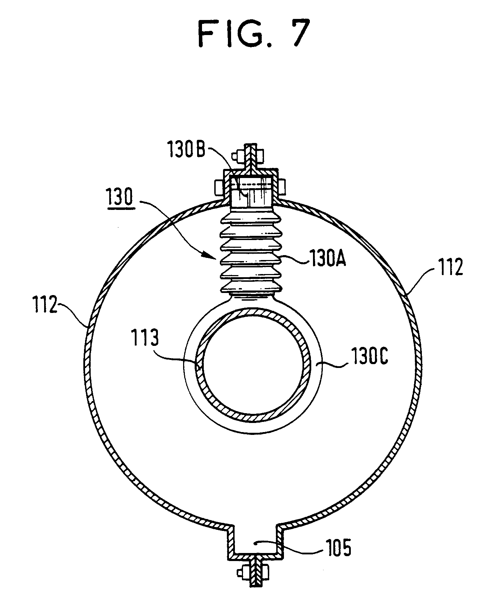

La figure 7 est une vue en coupe transversale d'une enveloppe aluminium 112 avec un conducteur de phase 113 supporté par des éléments de fixation selon un autre mode de réalisation. L'élément de fixation 130 du conducteur est un isolateur de révolution, comprenant facultativement des ailettes 130A, et comportant un pied de fixation 130B à l'enveloppe d'aluminium et un collier de serrage 130C emprisonnant le conducteur 113.

Dans la réalisation de la figure 7, le support 130 est suspendu à la partie supérieure de l'enveloppe, de telle sorte que les poussières éventuelles tombent dans la rigole inférieure 105 de l'enveloppe. Cette disposition est préférée mais, bien entendu, le support 130 pourrait aussi être fixé dans la rigole inférieure 105 de l'enveloppe d'aluminium.

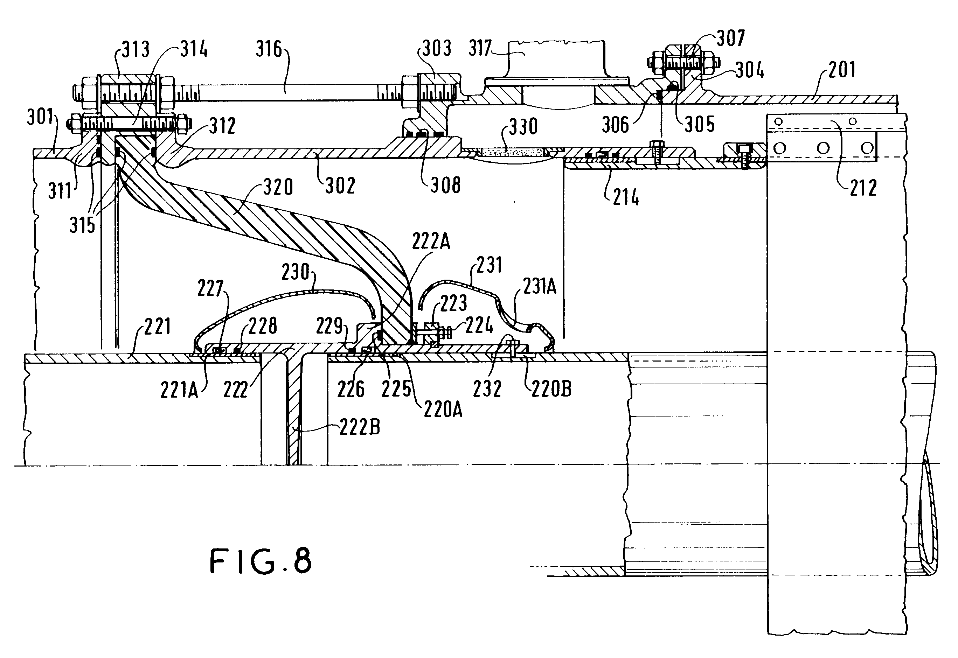

La figure 8 est une vue en demi-coupe axiale d'un élément de liaison pour la jonction de deux tronçons.

La référence 201 désigne l'enveloppe étanche du tronçon de la droite de la figure tandis que la référence 212 désigne l'enveloppe d'aluminium; la référence 220 désigne le conducteur de phase situé dans le tronçon placé à la droite de la figure, tandis que la référence 221 se rapporte au conducteur de phase du tronçon situé à la gauche de la figure 8.

L'organe de liaison, représenté partiellement à la gauche de la figure 8, est parfaitement symétrique par rapport à un plan perpendiculaire à l'axe du tronçon de ligne, à la différence près qu'il ne comporte qu'un seul cône isolant comme celui qui sera décrit plus loin.

Grâce à cette symétrie, le même organe de liaison sert à raccorder, de manière identique, un tronçon à la droite de la figure 8 et un tronçon dont n'apparaît à la gauche de la figure 8 que le conducteur de phase 221.

L'organe de liaison comprend un premier tube 301, prolongé par un second tube 302, et un troisième tube 303.

On va décrire en premier lieu la manière dont le tube étanche 201 du conducteur est relié à l'organe de liaison pour assurer l'étanchéité. A l'extrémité du tube 201 est soudé une butée métallique 304 venant en contact en bout avec un épaulement du tube 303. Des joints 305 et 306 assurent l'étanchéité entre les tubes 201 et 303. Des oreilles de la butée 304 et du tube 303 permettent l'emploi de boulons de serrage 307. L'étanchéité entre le tube 303 et le tube 302 est assuré par des joints 308. A l'extrémité de chacun des tubes 301 et 302 est fixée une pièce annulaire (respectivement 311 et 312); ces pièces enserrent de manière étanche un anneau de fixation 313, muni d'un épaulement pour la fixation d'un cône isolant 320 dont le rôle sera précisé plus loin. Des boulons 314 servent à la solidarisation des tubes 301 et 302, tout en enserrant l'anneau 313 et le cône 320. Des joints 315 assurent l'étanchéité entre les parties respectivement situées à gauche et à droite du cône isolant. L'anneau 313 sert également au passage de tiges filetées 316 pour la fixation du tube 303.

Le tube 303 porte un module de service 317 non représenté en détail et qui comprend notamment un organe de remplissage en gaz d'isolement et un manomètre.

On a donc vu comment la coopération des tubes 201 et 302, ainsi que du cône 320, permet d'une part de garantir l'étanchéité de l'enveloppe extérieure du conducteur de phase et d'autre part de réaliser une étanchéité de deux tronçons de conducteur adjacents l'un par rapport à l'autre. Ainsi, un démontage de l'un des tronçons n'entraîne pas la perte de gaz de toute la ligne mais seulement d'un tronçon. Un seul cône isolant est suffisant pour chaque organe de liaison pour atteindre ce but; comme ce sont des pièces coûteuses, il est donc préférable de n'en mettre qu'un seul par organe de liaison.

On va examiner maintenant comment la continuité électrique des enveloppes aluminium 212 est réalisée; on rappelle que ces enveloppes ne sont pas étanches au gaz, mais seulement à la poussière; il est nécessaire de les connecter électriquement avec soin car elles constituent le conducteur de retour de l'électricité.

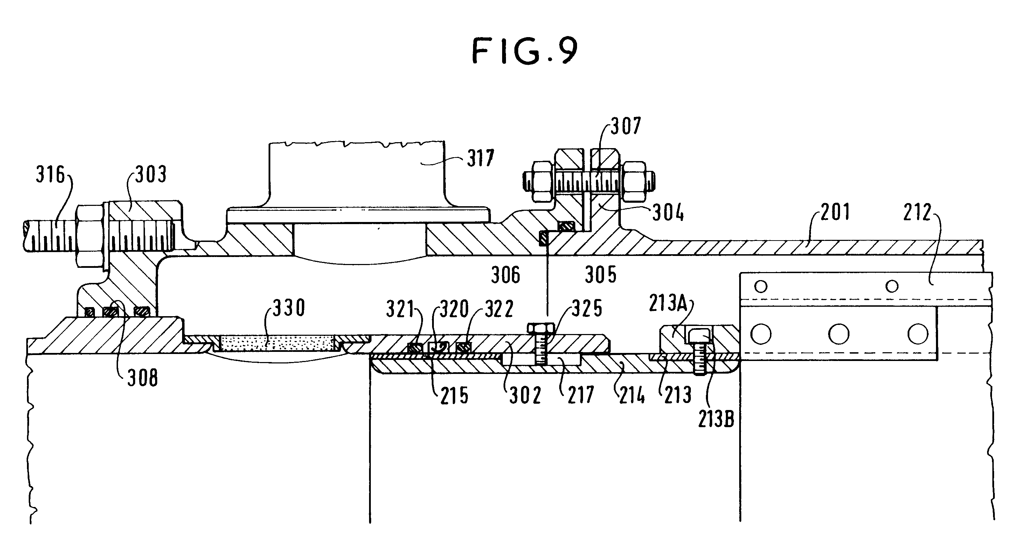

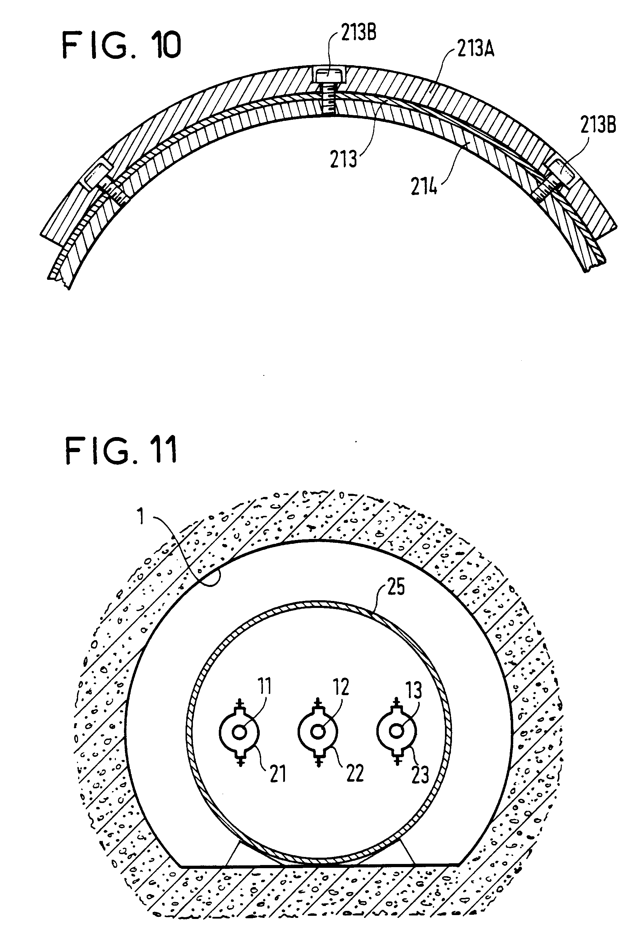

Pour fixer l'enveloppe d'aluminium à l'organe de liaison, de la manière qui sera décrite plus loin, l'enveloppe d'aluminium subit le préparation suivante:
- elle est partiellement découpée selon un plan perpendiculaire à son axe, de manière à laisser subsister un morceau 213 (figure 9). Sur ce morceau est fixée (figure 10), par des cavaliers 213A et des vis 213B, une portion de tube métallique épais 214 , plus longue que le morceau 213. Cette portion de tube est revêtue partiellement d'une feuille 215 de matériau bi-métal (aluminium en bas et cuivre en haut). Enfin, cette portion de tube est percée de rainures 217 (en variante, de trous oblongs).

Le tube 302 coopère avec la feuille 215 pour assurer la continuité électrique de l'enveloppe 201.

A cet effet, le tube 302 porte un contact électrique glissant 320, encadré par deux joints anti-poussière 321 et 322. Le contact électrique s'effectue entre le contact 320 et la portion cuivre de la feuille bi-métal 215. La longueur de la feuille bi-métal est choisie pour assurer le contact quelle que soit l'amplitude du déplacement relatif des tubes 302 et 215, ce déplacement étant dû à des dilatations différentielles dans le tronçon.

Une vis 325, débouchant dans la rainure 217, limite l'excursion relative des deux tubes précités.

En revenant à la figure 8, on voit que le tube 302 est percé d'un trou recevant un filtre à poussière 330, amovible. Lorsque le tube 303 est démonté et que le filtre 330 est ôté, un opérateur à accès aux pièces de liaison du conducteur 220 qui vont être décrites maintenant.

Deux portions adjacentes de conducteur 220 et 221, sont électriquement reliées par un manchon cylindrique 222, rigidifié par un disque central 222B.

Les conducteurs 220 et 221 sont disposés coaxialement à une certaine distance l'un de l'autre pour tenir compte des effets de dilatation.

Les conducteurs 220 et 221 sont munis, à leur extrémité, d'une feuille de contact (respectivement 220A et 221A), de préférence en matériau bi-métal.

Le manchon 222 comporte un épaulement 222A pour sa fixation étanche à l'aide d'un collier 223, de boulons 224 et de joints 225.

Le manchon porte des contacts électriques glissants 226 et 227 coopérant respectivement avec les surfaces 220A et 221A pour assurer le passage du courant entre les deux conducteurs 220 et 221.

Des joints anti-poussière 228 et 229, et des capots pare-effluves 230 et 231 complètent le dispositif.

Le tube 220 porte une rainure 220B (ou un trou oblong) dans laquelle s'engage l'extrémité d'une vis 232 porté par le manchon 222; cette disposition permet de limiter le déplacement relatif du manchon 222 et du conducteur 220 dû aux dilatations différentielles.

On note que le le capot 231 porte une ouverture 231A au droit de la vis 232 pour permettre son accès lors d'une opération de montage ou de démontage.

Pour éviter l'introduction de poussière à l'intérieur de l'enveloppe 212, par le trou résultant du découpage partiel de l'enveloppe, on peut obturer ce trou en repliant comme il convient, les morceaux découpés de l'enveloppe.

L'organe de liaison permet un montage et un démontage rapide de la ligne.

Un démontage s'effectue par exemple ainsi, partant de la position assemblée de la figure 8.

Si on veut remplacer le tronçon 201,212,220 par exemple, on dévisse les vis 307 et les tiges filetées 316 et on fait coulisser le tube 303 vers la gauche de la figure; on a ainsi accès au filtre 330 que l'on peut ôter; on a alors accès à la vis 232 par l'orifice 231A et on retire cette vis; on recommence les mêmes opérations sur l'autre extrémité de l'organe de liaison qui peut être déplacé, ce qui dégage un extrémité du tronçon de ligne considéré; il reste à démonter un seul côté de l'autre organe de liaison du tronçon considéré pour libérer le tronçon.

Le montage de la ligne s'effectue par les mêmes opérations effectuées en sens inverse.

Dans l'exemple décrit en référence aux figures 1 à 10, chaque conducteur de phase est muni d'une enveloppe aluminium et chaque enveloppe aluminium est munie d'une enveloppe étanche. L'invention s'applique, "mutatis mutandis", à une ligne blindée du type indiqué dans la figure 11, dans laquelle chaque conducteur de phase (11, 12, 13) est entouré par une enveloppe en aluminium (21, 22, 23), mais dans laquelle les différentes enveloppes d'aluminium sont entourées d'une enveloppe étanche commune (25).

L'invention s'applique à la construction de lignes blindées à haute tension, placées dans des galeries ou enfouies.

## Revendications

1. Procédé de fabrication d'une ligne blindée comprenant, pour chaque phase, un conducteur de phase (11, 12, 13, 14) entouré d'une enveloppe (21, 22, 23, 24) en aluminium, les enveloppes en aluminium étant entourées par au moins une enveloppe (31, 32, 33, 34) étanche vis-à-vis de l'extérieur, l'enveloppe étanche et les enveloppes d'aluminium étant remplies d'un gaz à bonnes propriétés diélectriques sous pression, caractérisé en ce qu'il comprend les opérations suivantes:
- on réalise, à partir de tubes étanches (111) de longueur comprise entre 5 et 20 mètres, des tronçons d'enveloppe étanche de la longueur L,
- on réalise, à partir de deux feuillards d'aluminium (101, 102) d'épaisseur faible, deux demi-coquilles qui sont assemblées au fur et à mesure de leur élaboration pour constituer l'enveloppe d'aluminium et qui sont munies d'organes de rigidification (116), d'organes de maintien (130) du conducteur de phase et de moyen de roulement (114),
- on dispose à l'intérieur de l'enveloppe d'aluminium, au fur et à mesure de sa formation, le conducteur de phase (113) qu'on fixe au moyens des organes de maintien (130) précités,
- on tire, au fur et à mesure de son élaboration, l'ensemble (ou les ensembles) constitué par l'enveloppe d'aluminium et son conducteur à l'intérieur du tronçon d'enveloppe étanche jusqu'à ce que cet ensemble débouche à l'extrémité du tronçon d'enveloppe étanche,
- on renouvelle les opérations précitées pour élaborer un autre tronçon de ligne blindée adjacent à celui qui vient d'être constitué,
- on fixe l'enveloppe étanche (111) (ou les enveloppes étanches), les enveloppes d'aluminium (112) et les conducteurs (220, 221) de chacun des deux tronçons voisins au moyen d'organes de liaison (301, 302, 303 ) entre tronçons,
- on renouvelle toutes les opérations ci-dessus jusqu'à ce que la ligne ait la longueur voulue et ceci, pour chacune des phases de la ligne,
- on remplit alors la ligne du gaz diélectrique choisi à la pression voulue, tronçon par tronçon.

2. Ligne blindée comprenant, pour chaque phase, un conducteur de phase (11, 12, 13, 14) entouré d'une enveloppe (21, 22, 23, 24) en aluminium, chaque enveloppe en aluminium (ou chaque groupe d'enveloppes en aluminium) étant entourée d'un enveloppe (31, 32, 33, 34) étanche vis-à-vis de l'extérieur, l'intérieur desdites enveloppes étanches étant rempli d'un gaz à bonnes propriétés diélectriques, caractérisée en ce que l'enveloppe d'aluminium est constituée de deux demi-coquilles (101, 102), chaque demi-coquille étant formée d'un feuillard plié ayant en section la forme d'un demi-cercle terminé à chaque extrémité par un épaulement (102B) et un méplat (102C), les demi-coquilles étant juxtaposées et assemblées par les méplats.

3. Ligne blindée selon la revendication 2, caractérisée en ce que les enveloppes d'aluminium sont disposées de manière que le plan joignant les méplats soit vertical.

4. Ligne blindée selon l'une des revendications 2 et 3, caractérisée en ce que les enveloppes d'aluminium sont munies de raidisseurs (116) formés de deux demi-colliers (116A, 116B) assemblés.

5. Ligne blindée selon l'une des revendications 2 à 4, caractérisée en ce que les enveloppes d'aluminium (112) reposent dans l'enveloppe étanche (111) par l'intermédiaire de roulettes (114).

6. Ligne blindée selon l'une des revendications 2 à 5, caractérisée en ce que le conducteur de phase (113) est maintenu à l'intérieur de l'enveloppe aluminium (112) au moyen d'organes de fixation (120) constitués par des portions de cône isolant (120A) muni d'un pied (120D) fixé à l'enveloppe et d'un bras (120B) solidarisé à un collier (124) dans lequel est enfilé le conducteur (113).

7. Ligne blindée selon la revendication 6, caractérisée en ce que le pied (120D) est fixé à la partie supérieure de l'enveloppe (112).

8. Ligne blindé selon l'une des revendications 2 à 5, caractérisée en ce que le conducteur de phase (113) est maintenu à l'intérieur de l'enveloppe (112) isolante au moyen d'isolateurs (130) fixés à l'enveloppe.

9. Ligne blindée selon la revendication 8, caractérisée en ce que les isolateurs (130) sont fixés à la partie inférieure de l'enveloppe en aluminium (112).

10. Ligne blindée selon la revendication 8, caractérisée en ce que les isolateurs (130) sont suspendus à la partie supérieure de l'enveloppe en aluminium (112).

11. Ligne blindée selon l'une des revendications 2 à 10, caractérisée en ce que l'enveloppe étanche est réalisée en un matériau choisi parmi l'acier, le béton ou les matières plastiques.

12. Ligne blindée selon l'une des revendications 2 à 11, caractérisée en ce que l'organe de liaison entre deux tronçons de ligne comprend, à chacune de ses extrémités, un premier tube (303) déplacable latéralement et muni d'un joint en bout (306) coopérant pour assurer l'étanchéité du tube étanche (201) avec une butée (304) fixée à l'extrémité dudit tube étanche (201).

13. Ligne blindée selon la revendication 12, caractérisée en ce que ledit organe de liaison comprend un second tube (302), coaxial audit premier tube et en contact étanche avec celui-ci.

14. Ligne blindée selon la revendication 13, caractérisé en ce que ledit premier tube est maintenu en place par des tiges filetées (316) s'engageant dans une pièce annulaire (313) serrée entre ledit second tube (302) et un troisième tube (301), coaxial audit second tube.

15. Ligne blindée selon la revendication 14, caractérisée en ce que ledit organe de liaison comprend un cône isolant (320) fixé auxdits second (302) et troisième (301) tubes et maintenant les conducteurs (220, 221) au moyen d'un manchon (222).

16. Ligne blindée selon la revendication 15, caractérisée en ce que ledit second tube (302) est en contact électrique avec un morceau de tube (214) métallique relié à l'enveloppe en aluminium (212).

17. Ligne blindée selon la revendication 16, caractérisée en ce que ledit morceau de tube (214) est revêtu d'une feuille de matériau bi-métal (215) coopérant avec des contacts glissants(320) portés par ledit second tube (302).

18. Ligne blindée selon l'une des revendications 16 et 17, caractérisé en ce que l'organe de liaison comprend des moyens pour limiter le déplacement relatif du second tube (302) et dudit morceau de tube (214).

19. Ligne blindée selon la revendication 18, caractérisée en ce que lesdits moyens pour limiter ledit déplacement comprennent une vis (325) portée par ledit second tube (302) coopérant avec une rainure ou trou oblong (217) dans ledit morceau de tube (214).

20. Ligne blindée selon l'une des revendications 15 à 19, caracterisée en ce que ledit manchon (222) est métallique et porte des contacts (226, 227) glissants coopérant avec les extrémités de deux conducteurs de phase (220, 221) adjacents.

21. Ligne blindée selon la revendication 20, caractérisée en l'organe de liaison comprend des moyens pour limiter le déplacement relatif du manchon (222) et d'un conducteur (220).

22. Ligne blindée selon la revendication 20, caractérisée en ce que lesdits moyens pour limiter ledit déplacement comprennent une vis (232) portée par le manchon (222) et débouchant dans une rainure ou trou oblong (220B) du conducteur (220).

23. Ligne blindée selon l'une des revendications 12 à 22, caractérisé en ce que ledit premier tube (303) porte un module de service (317) comprenant, au moins, un orifice de remplissage de gaz diélectrique et un manomètre.

24. Ligne blindée selon l'une des revendications 13 à 23, caractérisée en ce que ledit second tube (302) comporte un filtre à poussière (330) amovible.

25. Ligne blindée selon la revendication 24, caractérisée en ce que ledit filtre à poussière (330) est disposé au droit de ladite vis (232) portée par ledit manchon (222).

26. Ligne blindée selon l'une des revendications 16 à 25, caractérisée en ce que l'ouverture entre l'enveloppe d'aluminium (212) et le morceau de tube (214) qui y est fixé est obturé par les morceaux d'enveloppes repliés.

27. Ligne blindée selon l'une des revendications 2 à 26, caractérisée en ce que chaque enveloppe d'aluminium est entourée d'une enveloppe étanche.

28. Ligne blindée selon l'une des revendications 2 à 26, caractérisée en ce qu'elle comporte une enveloppe étanche commune à toutes les enveloppes d'aluminium.

## Claims

1. A method of manufacturing a metal-clad line comprising, for each phase, a phase conductor (11, 12, 13, 14) surrounded by an aluminum sheath (21, 22, 23, 24), with the aluminum sheaths being surrounded by at least one sheath (31, 32, 33, 34) which is gas-tight relative to the outside, the gas-tight sheath and the aluminum sheaths being filled with a gas having good dielectric properties and under pressure, the method being characterized in that it comprises the following operations:
gas-tight tubes (111) of length lying in the range 5 meters to 20 meters are used for making lengths of gas-tight sheath of length L;
two thin strips of aluminum (101, 102) are used to make two half-shells which are assembled together progressively as they are being made, thereby constituting the aluminum sheath, which strips are provided with stiffening members (116), holding members (130) for holding the phase conductor, and running means (114);
the phase conductor is disposed inside the aluminum sheath progressively while it is being built up, with the phase conductor (113) being fixed by means of the above-mentioned holding member (130);
as the assembly [or the assemblies] constituted by the aluminum sheath and its conductor are built up, it is [they are] pulled progressively into the length of gas-tight sheath until the opposite end of the length of gas-tight sheath is reached;
the above operations are repeated to make another length of metal-clad line following the length that has just been built up;
the gas-tight sheath (111) [or gas-tight sheaths], the aluminum sheaths (112) and the conductors (220, 221) in the two following lengths are interconnected by link means (301, 302, 303) between the lengths;
all of the above operations are repeated until each of the phases of the line has the desired length; and
the line is filled with the selected dielectric gas at the desired pressure, length by length.

2. A metal-clad line comprising, for each phase, a phase conductor (11, 12, 13, 14) surrounded by an aluminum sheath (21, 22, 23, 24), each aluminum sheath [or each group of aluminum sheaths] being surrounded by a sheath (31, 32, 33, 34) which is gas-tight relative to the outside, the insides of said gas-tight sheaths being filled with a gas having good dielectric properties, the line being characterized in that the aluminum sheath is made up from two half-shells (101, 102), each half-shell being formed from a folded strip whose section is in the form of a semicircle terminated at each end by a shoulder (102B) and by a flat (102C), the half-shells being juxtaposed and assembled by means of the flats.

3. A metal-clad line according to claim 2, characterized in that the aluminum sheaths are disposed so that the plane interconnecting the flats is vertical.

4. A metal-clad line according to claim 2 or 3, characterized in that the aluminum sheaths are provided with stiffeners (116) constituted by assembled pairs of half-collars (116A, 116B).

5. A metal-clad line according to any one of claims 2 to 4, characterized in that the aluminum sheaths (112) are supported inside the gas-tight sheath (111) via wheels (114).

6. A metal-clad line according to any one of claims 2 to 5, characterized in that the phase conductor (113) is held inside the aluminum sheath (112) by means of fixing members (120) constituted by insulating cone portions (120A) provided with respective legs (120D) fixed to the sheath and arms (120B) fixed to a collar (124) through which the conductor (113) is threaded.

7. A metal-clad line according to claim 6, characterized in that each leg (120D) is fixed to the top portion of the sheath (112).

8. A metal-clad line according to any one of claims 2 to 5, characterized in that the phase conductor (113) is held inside the aluminum sheath (112) by means of insulators (130) fixed to the sheath.

9. A metal-clad line according to claim 8, characterized in that the insulators (130) are fixed to the bottom portion of the aluminum sheath (112).

10. A metal-clad line according to claim 8, characterized in that the insulators (130) are suspended from the top portion of the aluminum sheath (112).

11. A metal-clad line according to any one of claims 2 to 10, characterized in that the gas-tight sheath is made of a material selected from: steel, concrete, and plastics.

12. A metal-clad line according to any one of claims 2 to 11, characterized in that the link member between two lengths of line comprises, at each of its ends, a first tube (303) which is laterally displaceable and provided with an end O-ring (306) co-operating with an abutment (304) fixed to the end of said gas-tight tube (201), thereby sealing the gas-tight tube (201).

13. A metal-clad line according to claim 12, characterized in that said link member includes a second tube (302) coaxial with said first tube and in gas-tight contact therewith.

14. A metal-clad line according to claim 13, characterized in that said first tube is held in place by threaded rods (316) engaged in an annular part (313) clamped between said second tube (302) and a third tube (301) which is in alignment with said second tube.

15. A metal-clad line according to claim 14, characterized in that said link member comprises an insulating cone (320) fixed to said second and third tubes (302, 301) and holding the conductors (220, 221) by means of a sleeve (222).

16. A metal-clad line according to claim 15, characterized in that said second tube (302) is in electrical contact with a portion of metal tube (214) connected to the aluminum sheath (212).

17. A metal-clad line according to claim 16, characterized in that said portion of tube (214) is covered by a bimetallic strip (215) which co-operates with sliding contacts (320) carried by said second tube (302).

18. A metal-clad line according to claim 16 or 17, characterized in that the link member comprises means for limiting relative displacement of the second tube (302) and of said portion of tube (214).

19. A metal-clad line according to claim 18, characterized in that said means for limiting said displacement comprise a screw (325) carried by said second tube (302) and co-operating with a groove or oblong hole (217) in said portion of tube (214).

20. A metal-clad line according to any one of claims 15 to 19, characterized in that said sleeve (222) is made of metal and carries sliding contacts (226, 227) that cooperate with the ends of two end-to-end phase conductors (220, 221).

21. A metal-clad line according to claim 20, characterized in that the link member includes means for limiting relative displacement of the sleeve (222) and a conductor (220).

22. A metal-clad line according to claim 21, characterized in that said means for limiting said displacement comprise a screw (232) carried by the sleeve (222) and engaged in a groove or an oblong hole (220B) in the conductor (220).

23. A metal-clad line according to any one of claims 12 to 22, characterized in that said first tube (303) carries a service module (317) comprising at least a pressure gauge and an orifice for dielectric gas filling.

24. A metal-clad line according to any one of claims 13 to 23, characterized in that said second tube (302) includes a removable gas filter (330).

25. A metal-clad line according to claim 24, characterized in that said dust filter (330) is disposed over said screw (323) carried by said sleeve (222).

26. A metal-clad line according to any one of claims 16 to 25, characterized in that the opening between the aluminum sheath (212) and the portion of tube (214) which is fixed thereto is closed by folded portions of the sheaths.

27. A metal-clad line according to any one of claims 2 to 26, characterized in that each aluminum sheath is surrounded by a gas-tight sheath.

28. A metal-clad line according to any one of claims 2 to 26, characterized in that it comprises a gas-tight sheath which is common to all of the aluminum sheaths.

## Patentansprüche

1. Verfahren zur Herstellung einer gekapselten Leitung, die für jede Phase einen Phasenleiter (11, 12, 13, 14) und eine diesen umgebende Aluminiumhülle (21, 22, 23, 24) besitzt, wobei die Aluminiumhüllen mit mindestens einer gegenüber der Außenwelt dichten Hülle (31, 32, 33, 34) umgeben ist und die dichte Hülle und die Aluminiumhüllen mit einem Gas guter dielektrischer Eigenschaften unter Druck gefüllt sind, dadurch gekennzeichnet, daß es folgende Verfahrensschritte aufweist:
- man stellt aus dichten Rohren (111) einer Länge zwischen 5 und 20 Metern Abschnitte der dichten Hülle einer Länge L her,
- man stellt aus zwei Aluminiumblechen (101, 102) geringer Dicke zwei Halbschalen her, die im Zuge ihrer Herstellung zusammengefügt werden, um die Aluminiumhülle zu bilden, und die mit Versteifungsorganen (116), Halteorganen (130) für den Phasenleiter und Rollmitteln (114) versehen sind,
- man bringt im Zuge der Herstellung der Aluminiumhülle in deren Innerem den Phasenleiter (113) an und befestigt ihn mit Hilfe der erwähnten Befestigungsorgane (130),
- man zieht im Zuge ihres Aufbaus die aus der Aluminiumhülle und ihrem Leiter im Inneren des Abschnitts der dichten Hülle gebildete Einheit so lange, bis diese Einheit am Ende des Abschnitts der dichten Hülle ankommt,
- man wiederholt die erwähnten Verfahrensschritte für die Herstellung eines anderen, dem bereits gebildeten Abschnitt benachbarten Abschnitts der gekapselten Leitung,
- man befestigt die dichte Hülle (111) (oder die dichten Hüllen), die Aluminiumhüllen (112) und die Leiter (220, 221) jedes der beiden benachbarten Abschnitte mit Hilfe von Verbindungsorganen (301, 302, 303) zwischen Abschnitten,
- man wiederholt alle obigen Verfahrensschritte, bis die Leitung die gewünschte Länge hat, und zwar für jede der Phasen der Leitung,
- man füllt dann die Leitung mit dem gewählten dielektrischen Gas auf den gewünschten Druck, und zwar Abschnitt für Abschnitt.

2. Gekapselte Leitung, die für jede Phase einen Phasenleiter (11, 12, 13, 14) aufweist, der von einer Aluminiumhülle (21, 22, 23 24) umgeben ist, wobei jede Aluminiumhülle (oder Gruppe von Aluminiumhüllen) von einer gegenüber der Außenwelt dichten Hülle (31, 32, 33, 34) umgeben ist, wobei der Innenraum der dichten Hüllen mit einem Gas guter dielektrischer Eigenschaften gefüllt ist, dadurch gekennzeichnet, daß die Aluminiumhülle aus zwei Halbschalen (101, 102) besteht, die je von einem gebogenen Blech gebildet werden, das im Querschnitt eine Halbkreisform besitzt und an jedem Ende eine Schulter (102B) und einen Flachbereich (102C) aufweist, wobei die beiden Halbschalen an den Flachstücken aneinandergesetzt und montiert werden.

3. Gekapselte Leitung nach Anspruch 2, dadurch gekennzeichnet, daß die Aluminiumhüllen so angeordnet sind, daß die die Flachstücke verbindende Ebene senkrecht verläuft.

4. Gekapselte Leitung nach einem der Ansprüche 2 und 3, dadurch gekennzeichnet, daß die Aluminiumhüllen Versteifungsglieder (116) aufweisen, die von zwei zusammengefügten Halbkragen (116A, 116B) gebildet werden.

5. Gekapselte Leitung nach einem der Ansprüche 2 bis 4, dadurch gekennzeichnet, daß die Aluminiumhüllen (112) in der dichten Hülle (111) über Rollen (114) aufliegen.

6. Gekapselte Leitung nach einem der Ansprüche 2 bis 5, dadurch gekennzeichnet, daß der Phasenleiter (113) im Inneren der Aluminiumhülle (112) über Befestigungsorgane (120) gehalten wird, die aus Abschnitten eines Isolierkonus (120A) gebildet werden, wobei dieser Konus einen an der Hülle befestigten Fuß (120D) und einen an einem Kragen (124) befestigten Arm (120B) besitzt, in den der Leiter (113) hineingesteckt ist.

7. Gekapselte Leitung nach Anspruch 6, dadurch gekennzeichnet, daß der Fuß (120) am oberen Bereich der Hülle (112) befestigt ist.

8. Gekapselte Leitung nach einem der Ansprüche 2 bis 5, dadurch gekennzeichnet, daß der Phasenleiter (113) im Inneren der Isolierhülle (112) mit Hilfe von an der Hülle befestigten Isoliermitteln (130) gehalten wird.

9. Gekapselte Leitung nach Anspruch 8, dadurch gekennzeichnet, daß die Isolatoren (130) am unteren Teil der Aluminiumhülle (112) befestigt sind.

10. Gekapselte Leitung nach Anspruch 8, dadurch gekennzeichnet, daß die Isolatoren (130) am oberen Teil der Aluminiumhülle (112) angehängt sind.

11. Gekapselte Leitung nach einem der Ansprüche 2 bis 10, dadurch gekennzeichnet, daß die dichte Hülle aus einem Material hergestellt ist, das unter Stahl, Beton und Kunststoffen ausgewählt wird.

12. Gekapselte Leitung nach einem der Ansprüche 2 bis 11, dadurch gekennzeichnet, daß das Verbindungsorgan zwischen zwei Leiterabschnitten an jedem Abschnittsende ein erstes Rohr (303) aufweist, das seitlich verschiebbar ist und eine Dichtung (306) am Ende besitzt, welche mit einem am Ende des dichten Rohrs (201) befestigten Anschlag (304) im Hinblick auf die Dichtheit des dichten Rohrs (201) zusammenwirkt.

13. Gekapselte Leitung nach Anspruch 12, dadurch gekennzeichnet, daß das Verbindungsorgan ein zweites Rohr (302) aufweist, das koaxial zum ersten Rohr liegt und mit diesem in dichtem Kontakt steht.

14. Gekapselte Leitung nach Anspruch 13, dadurch gekennzeichnet, daß das erste Rohr mittels Gewindestangen (316) fixiert wird, die in ein ringförmiges Bauteil (313) eingreifen, welches zwischen dem zweiten Rohr (302) und einem zum zweiten Rohr koaxialen dritten Rohr (301) eingespannt ist.

15. Gekapselte Leitung nach Anspruch 14, dadurch gekennzeichnet, daß das Verbindungsorgan einen Isolierkonus (320) aufweist, der am zweiten und am dritten Rohr (302, 301) befestigt ist und die Leiter (220, 221) mit Hilfe einer Muffe (222) festhält.

16. Gekapselte Leitung nach Anspruch 15, dadurch gekennzeichnet, daß das zweite Rohr (302) in elektrischem Kontakt mit einem rohrförmigen Metallstück (214) steht, das mit der Aluminiumhülle (212) verbunden ist.

17. Gekapselte Leitung nach Anspruch 16, dadurch gekennzeichnet, daß das rohrförmige Metallstück (214) mit einem Bimetallblech (215) bedeckt ist, das mit Gleitkontakten (320) auf dem zweiten Rohr (302) zusammenwirkt.

18. Gekapselte Leitung nach einem der Ansprüche 16 und 17, dadurch gekennzeichnet, daß das Verbindungsorgan Mittel zur Begrenzung der Relativverschiebung des zweiten Rohrs (302) und des rohrförmigen Metallstücks (214) enthält.

19. Gekapselte Leitung nach Anspruch 18, dadurch gekennzeichnet, daß die Mittel zur Begrenzung der Relativverschiebung eine Schraube (325) aufweisen, die im zweiten Rohr (302) steckt und mit einer Rille oder einem Langloch (217) in dem rohrförmigen Metallstück (214) zusammenwirkt.

20. Gekapselte Leitung nach einem der Ansprüche 15 bis 19, dadurch gekennzeichnet, daß die Muffe (222) aus Metall ist und Gleitkontakte (226, 227) trägt, die mit den Enden der beiden benachbarten Phasenleiter (220, 221) zusammenwirken.

21. Gekapselte Leitung nach Anspruch 20, dadurch gekennzeichnet, daß das Verbindungsorgan Mittel zur Begrenzung der Relativverschiebung der Muffe (222) und eines Leiters (220) besitzt.

22. Gekapselte Leitung nach Anspruch 20, dadurch gekennzeichnet, daß die Mittel zur Begrenzung der Relativverschiebung eine in der Muffe (222) steckende Schraube (232) aufweisen, die in eine Rille oder ein Langloch (220D) des Leiters (220) hineinragt.

23. Gekapselte Leitung nach einem der Ansprüche 12 bis 22, dadurch gekennzeichnet, daß das erste Rohr (303) einen Bedienungsmodul (317) aufweist, der mindestens eine Öffnung zum Einfüllen von dielektrischem Gas und ein Manometer aufweist.

24. Gekapselte Leitung nach einem der Ansprüche 13 bis 23, dadurch gekennzeichnet, daß das zweite Rohr (302) ein entfernbares Staubfilter (330) aufweist.

25. Gekapselte Leitung nach Anspruch 24, dadurch gekennzeichnet, daß das Staubfilter (330) in Höhe der Schraube (232) angeordnet ist, die auf der Muffe (222) sitzt.

26. Gekapselte Leitung nach einem der Ansprüche 16 bis 25, dadurch gekennzeichnet, daß die Öffnung zwischen der Aluminiumhülle (212) und dem dort befestigten rohrförmigen Metallstück (215) durch die umgebogenen Hüllenenden verschlossen ist.

27. Gekapselte Leitung nach einem der Ansprüche 2 bis 26, dadurch gekennzeichnet, daß jede Aluminiumhülle von einer dichten Hülle umgeben ist.

28. Gekapselte Leitung nach einem der Ansprüche 2 bis 26, dadurch gekennzeichnet, daß sie eine gemeinsame dichte Hülle für alle Aluminiumhüllen aufweist.
